**Europäisches Patentamt**

**European Patent Office**

**Office européen des brevets**

(11) Publication number: **0 151 578**
**B1**

# (12) EUROPEAN PATENT SPECIFICATION

(45) Date of publication of patent specification: **05.07.89**

(21) Application number: **84901788.4**

(22) Date of filing: **25.04.84**

(86) International application number:
**PCT/GB84/00141**

(87) International publication number:
**WO 84/04315 08.11.84 Gazette 84/26**

(60) Divisional application 84116433 filed on 28.12.84.

(51) Int. Cl.⁴: **C 08 L 3/02, D 21 H 3/20,**
**D 21 D 3/00, B 05 D 1/02,**
**D 21 H 3/38**

(54) **IMPROVEMENTS IN PAPER AND BOARD MANUFACTURE.**

(30) Priority: **25.04.83 GB 8311152**

(43) Date of publication of application:
**21.08.85 Bulletin 85/34**

(45) Publication of the grant of the patent:
**05.07.89 Bulletin 89/27**

(84) Designated Contracting States:
**AT BE CH DE FR GB LI NL SE**

(56) References cited:
**EP-A-0 018 086**
**CA-A- 704 036**
**CA-A- 733 296**
**FR-A-2 166 499**
**GB-A- 773 732**
**GB-A- 934 638**
**GB-A- 936 662**
**GB-A-2 016 498**
**US-A-3 692 552**

**WO-A-82/01020**

(73) Proprietor: **P.T. CHEMICALS LIMITED**
**3 Highland Close**
**Chalfont St. Peter Buckinghamshire SL9 0DR**
**(GB)**

(72) Inventor: **O'CALLAGHAN, William**
**12 Meadway Park Gerrards Cross**
**Buckinghamshire SL9 7NN (GB)**
Inventor: **CRUSE, John William**
**The Sussex Barn Silverhill, Robertsbridge**
**Sussex TN32 5PA (GB)**

(74) Representative: **Hale, Stephen Geoffrey**
**J.Y. & G.W. Johnson Furnival House 14/18 High**
**Holborn**
**London WC1V 6DE (GB)**

Courier Press, Leamington Spa, England.

## Description

This invention relates to paper or board manufacture. More especially, it relates to a starch-board composition for use in improving the strength of paper and board and to a method of paper or board manufacture in which such a composition is added to the mixture or applied to the web of fibres during the process of manufacturing the paper or board.

It is well known to add during the early stages of paper or board manufacture one or more additives so as to increase the inter-fibre bonding and thus the strength of the eventual paper or board. The additives are usually polysaccharides including starches and cellulose and their chemical derivatives as well as other organic substances capable of forming chemical links with the cellulose which forms the basis of the paper or board web. This latter cellulose may have been modified by the paper or board manufacturer in order to assist the web formation during the early stages of manufacture preceding the web formation.

Additives as described in the application can be added to the pulp itself, or to the early stages in the formation of the paper web ("wet-end addition"), i.e. when the water content is reduced from about 99% to about 30%. The additives are in such cases distributed more or less uniformly throughout the thickness of the paper or board. It is also known, for convenience, to apply the additive to the formed web, on one or both surfaces thereof in stages of manufacture subsequent to web formation, as the water content is reduced to 2% to 20% by weight of the web.

"Size-Press Addition" named after the relevant part of the paper-making machine, is an example of a known process; application of additives may be effected at this stage using solutions or dispersions of the additives, of foamed liquids, or dry powders. It is known that, whilst the size press process is a useful method of applying substances to paper or board, the equipment is expensive to buy and install; it also consumes large amounts of energy to drive the machinery and to carry out the extra drying operations consequent on the use of a size press.

Since the application of substances at the size press is carried out using solutions or dispersions in water, it is necessary to arrange for extra drying equipment to be installed in addition to that used to dry the paper or board before it is passed through the size press. This extra drying requires up to 30% extra drying equipment and represents a further 30% increase in energy consumed during the drying of the paper or board.

The present invention is concerned with the transfer, handling and subsequent behaviour on heating of these dispersions and is based in part on a consideration of the flow characteristics thereof.

When dispersions of starch in water are subjected to high rates of shear, e.g. high rates of flow through restricted orifices such as those which are normally used to produce sprays, they exhibit considerable dilatancy, i.e. the apparent viscosity or resistance to flow increases as the rate of shear increases. The result of such increases is to restrict or stop flow. Dilatancy is particularly noticeable in suspensions of starch where the starch represents 5% or more of the total fluid. This stoppage is familiar to those users of starch who wish to spray suspensions of raw or processed starch as aids to various industrial processes including application to paper and board during and subsequent to manufacture.

Aqueous dispersions of starch also tend to form sediments owing to the effect of gravity or inertial forces on the particulate matter suspended in the water. Such sediments are the cause of much failure of equipment. In order to prevent or reduce the occurrence of sedimentation, it has hitherto been customary to increase the viscosity of the suspension by raising the temperature of the starch above the temperature at which the individual particles rupture; the process is generally referred to as "cooking". This enables the starch to hydrate, forming a gel which, by increasing the fluid viscosity, reduces the tendency of the starch particles to sediment. Alternatively, it is customary to add substances which, by raising the viscosity of the aqueous phase of the suspension, reduce the sedimentation process. Such viscosity-increasing substances include cold-water-soluble derivatives of starch or of cellulose and many high molecular weight polyhydric substances such as polyethylene oxide ethers, polyvinyl alcohols as well as "swelling clays" such as bentonite, attapulgite, Laponite and the like which are capable of raising the viscosity of the dispersion of starch in cold water.

However, such procedures as described above lead to poor spray formation since the fluids require high pumping pressures in order to achieve a sufficiently high degree of turbulence at the spray head to produce the fine droplets that are desirable for application as herein described. Such high pumping pressures frequently lead to failure of equipment due to the inherent tendency of starch suspensions to become dilatant. The present invention has discovered a method of paper or board manufacture in which further additives are present in the strength-affecting starch suspension.

CA—A—733,296 discloses the use of sodium carboxymethyl cellulose as a thickening agent in starch compositions applied to paper. US—A—3,692,552 discloses a liquid laundry starch comprising an aqueous suspension of starch in an aqueous suspension of xanthan gum. GB—A—2,016,498 discloses a composition for use in flocculating fillers in aqueous suspensions for use in papermaking, the composition comprising a starch, an organic polyelectrolyte such as a cationic polyacrylamide capable of flocculating mineral filler particles in aqueous suspension and an agent capable of regulating the mobility of a dispersion, for example xanthan gum.

According to the present invention there is provided a composition for use in improving the strength of paper or board, comprising an aqueous suspension of uncooked starch and including xanthan gum in an amount of from 0.025% to 1.0% by weight on the weight of water in the starch suspension to prevent dilatancy and to increase the viscosity of the suspension so as substantially to prevent settlement of starch particles during storage and transportation, and also including a water-soluble polymer capable of forming a continuous film on application of the composition to paper or board, said polymer being present in an amount of from 0.25 to 7.5% by weight of water in said suspension.

The invention also provides a method of making such a composition including adding, to an aqueous suspension of uncooked starch, xanthan gum and a water-soluble polymer capable of forming a continuous film on application of the composition to paper or board.

The invention further provides a method of making paper and board comprising applying (a) an aqueous suspension of uncooked starch containing xanthan gum in an amount of from 0.025 to 1.0% by weight on the weight of water in the starch suspension to prevent dilatancy and to increase the viscosity of the suspension so as substantially to prevent settlement of starch particles and (b) a water-soluble polymer capable of forming a continuous film on application of the composition to paper or board, said polymer being used in an amount of from 0.25 to 7.5% by weight of water in said suspension. The aqueous suspension of starch may be applied to the paper web during or after its formation.

Xanthan gum is the anionic complex polymer obtained by fermentation of a suitable sugar-based medium by the orgnism *Xanthomonas campestris*. Xanthan gum is a hydratable polymer and is used in an amount such that the rheology of the suspension is altered so as to render the suspension more pseudoplastic whereby application to the web is facilitated since pseudoplastic (alternatively known as visco-elastic or shear-thinning) fluids as described in this invention are capable of having sufficient viscosity to prevent sedimentation of dispersed particles such as starch under the low rates of shear experienced during storage or whilst being transported; yet, when subjected to high rates of shear such as occur when a fluid is expelled from a narror orifice such as the nozzle of a spray jet, the same fluids exhibit sufficiently low viscosity to permit the formation of droplets suitable for the application of solutions or suspensions to paper or board during the early stages of manufacture.

The water-soluble polymeric substance is capable of forming a continuous film at or near the surface of the paper or board.

Although the compositions according to the invention may be applied to the surface of the paper by conventional, high-pressure sprays, it is preferred to use a rotary atomiser which has hitherto not been used in the manufacture of paper although well known in the agricultural art. The atomiser is available in serveral similar forms including devices sold under several registered trade marks including those of "MICRON MICROMAX" and "LELY HYDRASPIN". These atomisers and other similar devices comprise a truncated hollow conical shell set to spin on its vertical axis with the narrow end downwards. A method of applying a suspension or solution of a substance in a liquid in the manufacture of paper or board, comprising continuously supplying the substance in the liquid to a rotary atomiser and allowing the spray discharged therefrom to fall on the surface of the paper or board moving relatively to the atomiser, is claimed in Application No. 84116433.8 (Publication No. 157,949) which is a divisional of the present application.

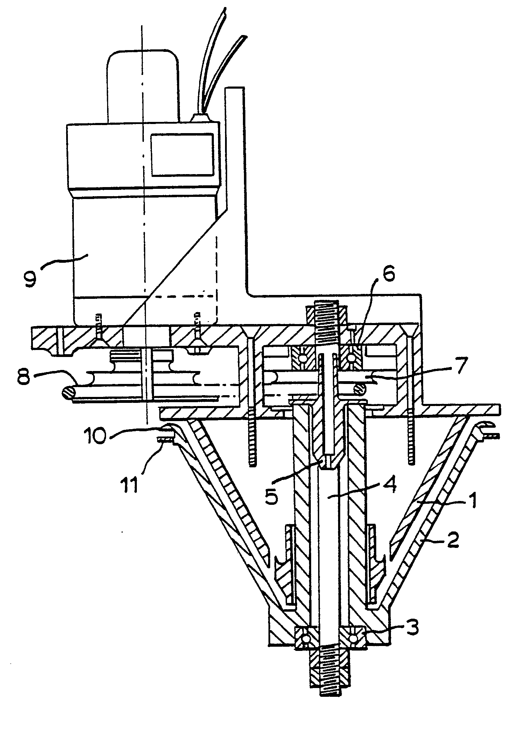

An illustration of the configuration of a suitable atomiser is known in the accompanying drawing, which consists of a sectional view of a twin-cone system. The atomiser comprises a fixed inner cone 1 surrounded by an outer cone 2 mounted on a bottom bearing 3 situated at the end of a central shaft 4. A central nozzle 5 is arranged to supply incoming fluid. The outer cone 2 is provided at the top with a top bearing 6 and drive means comprising a belt driven pulley system 7, 8 coupled with an electric motor 9. The upper outer edge of the outer cone 2 is provided with teeth 10 and a circumferential protecting ring. The fluid to be atomised is pumped through one or more ports into the interior of the spinning cone 2 and is subsequently carried upwards and outwards across the inner surface of the spinning cone 2 until it leaves the cone tangentially at its widest, upper circumference. The size of the droplets generated by this movement of the fluid is partly controlled by arranging for the upper edge of the cone to be serrated in the form of teeth 10 arranged radially around its upper surface. The cone may be driven by an electric or air or hydraulic motor through a suitable drive and with suitable bearings to support the cone rigidly on its mounting. In the case of a hydraulic motor, the driving energy may be transferred to the motor by means of a conventional hydraulic generator pump and specialised so-called "hydraulic fluid"; alternatively, the driving energy may be transferred by arranging for the aqueous starch suspension or other fluid, intended to be applied to the paper, to drive a turbine connected to the spinning cone.

For a given atomiser and a liquid of given rheological properties and set spinning at a given speed of rotation, droplets of uniform size are generated. It follows that droplet size can be selected by choosing an appropriate combination of atomiser geometry, fluid rheology and speed of rotation in order to meet the particular requirements of the user. Each of the parameters governing droplet size may be adjusted independently of the others and also independently of the rate of flow of the suspension or solution being applied to the paper surface, whereas with a conventional spray nozzle as previously used in the art, the droplet size is dependent on the pressure drop across the nozzle which, in turn, governs the rate of flow. Since the droplets produced by the atomiser are of virtually uniform size, they follow similar trajectories thus permitting a remarkably close degree of control of the pattern laid down on the paper surface and, hence, uniformity of application. If the droplets are ejected from the rotating atomiser set to spin on a vertical axis, they will travel in a horizontal trajectory; it therefore follows that they will each travel along a path determined by the resultant of the horizontal forces produced by the tangential motion and the force of gravity. If the body of the atomiser is placed so that the base of the cone is close to the surface to which the fluid is to be applied, it follows that the droplets will travel approximately 20 centimetres in the vertical direction under the force of gravity and so will be travelling very much more slowly than would similar droplets ejected at high velocity from a conventional pressure-operated spray nozzle. This is particularly advantageous when the fluid is to be applied to the surface of paper or board during the early stages of manufacture when the water content of the paper is high and the strength of the paper consequently low.

One or more atomisers may be fixed to a boom set so as to allow the fluid to be applied to the upper or lower sides of the paper or board as it passes through the paper machine. If desired, part of the circumference of the spinning cone may be surrounded by a shield so as to restrict the passage of droplets to the space diametrically opposite the shield; this permits directional application of fluids to be made as and when required by the user. Fluid collected by the shield can be returned to the holding tank or into the fluid circulating system as may be convenient.

The addition of xanthan gum is concerned with the rheology of the suspension. It is well known that the velocity of a liquid at which it changes from laminar or quiescent flow to turbulent flow is defined by the Reynolds Equation expressed as follows:—

$$NR = \frac{d.v.r}{V} . K$$

where

Nr=the Reynolds number of the fluid

d=the density of the fluid

v=the velocity of the fluid

r=radius of the pipe or orifice through which the fluid is flowing

K=a proportionality constant

V=the viscosity of the fluid

If the above parameters are expressed in cgs units, it is known that turbulence occurs when the Reynolds Number exceeds 2000. It can be seen that if the value of V (the viscosity) for a particular fluid is low, the Reynolds Number will be high and so turbulence will occur in conditions in which a fluid of higher viscosity would flow in a laminar manner; additionally, the low viscosity will enable the fluid to flow at a higher velocity under given circumstances and so further increase the Reynolds Number and, hence, the turbulence of the fluid.

It is well known that, for optimum efficiency of a spray or atomising system, it is necessary for the fluid to be in a state of turbulence at the point at which break-up into droplets occurs; in other words, optimum droplet formation occurs when the fluid viscosity is low. It therefore follows that, if two fluids of different viscosities are compared under similar conditions of flow as defined by the parameters used in the Reynolds Equation, better spray efficiency will be obtained in the fluid with the lower viscosity.

Further consideration of the rheology of the suspension of starch requires that the viscosity or resistance to deformation within the fluid should be as high as possible when the fluid is at or virtually at rest, i.e. under conditions of low rates of shear. Prior art teaches that a starch or similar suspension could be stabilised if the fluid viscosity is raised by cooking at least part of the starch or by the addition of viscosity-increasing substance as mentioned earlier, i.e. the starch particles are prevented from setting out under the forces of gravity or inertia. Stokes' Law illustrates this by calculating that the forces exerted on suspended particles by external forces are inversely proportional to the viscosity of the fluid. However, such treatments give rise to high viscosities which are detrimental to the efficiency of the spraying equipment. If follows, therefore, that the rheology of the fluid in which the starch is suspended should exhibit a high viscosity at low rates of shear in order to prevent settlement of the starch particles; at the same time it should exhibit low viscosity at high rates of shear in order to ensure sufficient turbulence to form droplets of opimum size and particle size distribution.

It is well known that the viscosity of solutions of some polymeric substances falls off more rapidly than others as the rate of shear or the rate of flow through a given orifice is increased. This is illustrated in the following Table in which the viscosities in water of several well-known high viscosity polymeric substances, namely carboxymethyl cellulose (CMC), hydroxy ethyl cellulose (HEC), guar gum (GG), xanthan gum (XG) and hydroxypropylmethylcellulose (MC), are compared over a range of rates of shear; the respective viscosities and rates of shear were measured with a Brookfield Viscometer fitted with a concentric bob and cylinder attachment sold under the designation SC4 Small Sample Adapter:—

| Shear rate (sec-1) | 0.5 | 0.9 | 2.3 | 4.7 | 9.3 | 18.6 | 46.5 | 93.0 |
|---|---|---|---|---|---|---|---|---|
| Polymer* | Viscosity (mPa.s) @ 20 deg C | | | | | | | |
| CMC | 18000 | 13000 | 8400 | 6000 | 4300 | 3000 | 1900 | 1400 |
| HEC | 8000 | 6500 | 5000 | 3800 | 2700 | 1900 | 1100 | |
| GG | 1100 | 9100 | 5800 | 3900 | 2400 | 1500 | 700 | |
| XG | 32000 | 17000 | 7500 | 3800 | 1900 | 1100 | 450 | 240 |
| MC | 660 | 550 | 480 | 430 | 400 | 340 | 260 | 210 |

The present invention is based in part on the fact that if a minor proportion of xanthan gum capable of providing aqueous solutions of high pseudoplasticity is added to starch powder or incorporated into a suspension of starch, it renders the starch capable of being stored for prolonged periods in aqueous suspension; of being capable of being transported through restricted orifices without giving rise to dilatancy; and its suspensions of being readily transformed into droplets of sufficiently small size to enable them to be used as a means of applying starch uniformly to surfaces including surfaces of paper during manufacture.

Xanthan gum is capable of dissolving in water to produce solutions possessing very high viscosity at low rates of shear compared with other commercially available polymers but a relatively low viscosity at high rate of shear; this is illustrated in Table 1. Solutions of xanthan gum show little variation in their physical properties, including rheology, over temperature ranges normally experienced in paper mills and other closed industrial premises; these properties also show neglible variations when ionic and other dissolved substances are present with the xanthan gum. This is especially important when water of unknown composition is used to prepare the starch suspensions e.g. when recycled water or differing degrees of hardness or with differing salt contents and at varying temperature is used in such preparations.

The rheology-affecting properties of xanthan gum are of particular importance if it is desired to apply starch in the form of a suspension or slurry in water since the presence of the xanthan gum in the suspension greatly reduces the tendency of starch particles to settle out or form intractable sediments. The presence of xanthan gum in a starch suspension as described in this invention allows users to store such suspensions for prolonged periods and enables users to transport the starch in the form of slurry to its eventual destination without the necessity to install special agitation equipment in the slurry containers used for transport and storage of the slurry. The convenience of being able to transport and store starch suspensions by the addition of xanthan gum is particularly important in that such suspensions are available as residues produced in certain food-manufacturing processes; it is economically advantageous to be able to supply the starch in the suspension or slurry form in which it is produced rather than to extract and dry the starch and subsequently have to re-form the suspension before use. This invention provides an economic method of storing and transporting such starch suspensions or slurries to the benefit of the starch and paper industries.

The presence of xanthan gum in starch suspensions also overcomes the tendency of such suspensions to exhibit the phenomenon of dilatancy which can best be described as a rise in viscosity or resistance to flow as the rate of shear increases. Dilatancy is a condition to be avoided in handling starch and other suspensions since dilatant fluids tend to cease flowing under conditions of high rates of shear such as occur inside pumps and control valves, restrictions and bends in pipes and in the nozzles of conventional spraying equipment. Therefore, the presence of xanthan gum in such suspensions serves to prevent the well-known and troublesome tendency of suspensions to cause blockages in the equipment used to carry them and, particularly, in the nozzles of conventional spray equipment.

The amount of weight of xanthan gum can vary between 0.025% and 1.0% of the water used to prepare the starch suspensions; in the case of suspensions prepared from dried, powder starch, the xanthan gum can be incorporated in the starch powder together with such other polymeric substances as may be desired so as to be present in the aforementioned proportions in the slurry during use. In the case of starch already prepared in suspension form as previously described, it is convenient to add the xanthan gum at an early stage in order to facilitate transport and prolonged storage.

The second aspect of this invention is concerned with the film-forming properties of certain polymers when dissolved or otherwise dispersed in water and applied in droplet form in a manner similar to that already described for the application of starch suspensions to paper or board during manufacture. The preferred polymers are polysaccharides such as the alkali metal salts of carboxymethyl starches or of carboxymethyl celluloses or of alginic acid or of polyacrylic acid and their homologues, or (more preferably) the sodium salt of carboxymethyl cellulose commonly known as SCMC or CMC. The polymers may be applied separately or as part of the suspension of starch containing xanthan gum in order to provide different benefits to suit the requirements of paper and board manufacturers.

The carboxymethyl celluloses can have a degree of carboxymethylation (DS) of from 0.35 to 1.4 (DS being the average number, of the total of three labile hydroxy groups theoretically available for substitution in each anhydroglucose ring within the cellulose molecule chain which are substituted by carboxymethyl groups) and total molecular weights from 15,000 to 800,000, preferably 50,000 to 250,000. It has been discovered in this invention that the presence of SCMC or the other polymers described in an aqueous starch dispersion has the effect of reducing the temperature at which starch particles rupture and form a gel (the gelation Temperature) as exemplified by a rapid increase in viscosity. For example, 4 parts of SCMC of molecular weight approximately 100,000 and degree of carboxymethylation of 0.85 were added to 16 parts of wheat starch. The effect was to reduce the gelation temperature of a 20% by weight starch suspension from 64 degrees Celsius to 59 degrees Celsius. This reduction in gelation temperature is important in the paper or board making processes in that it is known that low temperature gelation of starch improves the beneficial effect of adding starch to cellulose. Thus, the addition of such SCMC to starch is an important and hitherto unexpected method of improving the economy of operating the paper or board manufacturing processes.

The amount of these polymers, or mixtures thereof, can vary up to 10% of the weight of the water used to carry the additives through a conventional spray or the atomising distributor as herein described, but is more usually 0.25% to 7.5%.

The presence of xanthan gum as part of the aqueous dispersion of starch and a film-forming water-soluble polymer such as SCMC increase the resistance to flow of the dispersion and thus serves to control the rate at which the dispersion penetrates the paper after application. It follows, therefore, that the presence of xanthan gum will keep the dispersion at or close to the surface of the paper even when the paper contains high proportions of water such as occurs during the early stages of paper manufacture.

In the method of the invention it is envisaged that starch may be applied to paper or board by the methods described herein so as to represent from 0.5% to 10% of the weight of the dried paper. It is also envisaged that a rheology-affecting material. i.e. xanthan gum, may be present in sufficient quantity to prevent the starch settling out or its dispersions becoming dilatant and thus unsuitable for transportation through restricted orifices. It is also envisaged that the so-called water-soluble film-forming polymers as described above may be applied to paper or board by the methods described herein in order to provide improvements to the paper or board or to augment the benefits of applying starch. It is envisaged that the starch and polymers may be blended together in the dry form or by mixing together their respective dispersions or solutions and then applying the resultant mixture by the methods herein described; or by arranging for dispersions or solutions of the respective materials to be applied severally through two or more atomising distributors set so as to apply the respective materials at the most appropriate points of the paper- or board-making process.

Paper or board manufactured by a process according to the invention has been shown to have increased strength and improved surface qualitites, as described below in the Examples given, which make it a more valuable commodity.

The benefits of the invention are further demonstrated with reference to the following Experiments;

Experiment 1—To demonstrate the benefits of SCMC
(a) Prior art
100 grams of wheat starch were dispersed in 1000 ml water to form a slurry containing 10% starch solids at room temperature.

8 ml of the above slurry were placed in the cylindrical container of a Brookfield SC-4 Adapter fitted with the appropriate bob which was set to rotate at 20 revolutions per minute (rpm) and the temperature to rise from 20 degrees Celsius at a rate of 2 degrees per minute by means of a thermostatically controlled water circulator. Dial readings were taken continuously until the viscosity of the suspension had undergone a rapid rise indicating gelation. The dial readings were plotted on graph paper. By extrapolation, the gelation temperature was judged to be 64 degrees Celsius.

(b) Addition of SCMC of low DS
To 250 ml of the starch slurry prepared for the above were added 1.25 grams of SCMC of molecular weight approximately 100,000 and degree of carboxymethyl substitution 0.65, representing 5% by weight of the starch solids and 0.5% the total slurry/solution combination. The mixture was stirred mechanically for one hour. 8 ml of the mixture were placed in the cylinder of the Brookfield SC-4 and the procedure described above was repeated. The extrapolated gelation temperature was judged to be 60 degrees C.

(c) Addition of SCMC of higher DS
To a further 250 ml of the original starch slurry were added 1.25 grams of SCMC of similar molecular weight to the SCMC used in Example (b) but with a degree of substitution of 0.8 and the experiment repeated. In this case the extrapolated gelation temperature was judged to be 59 degrees C.

(d) Addition of extra SCMC
To a further 250 ml of the original starch slurry were added 2.5 grams of the SCMC used in Example (c), representing 10% by weight of the starch solids and 1.0% of the total dispersion. The experiment was repeated and the gelation temperature judged to be 58 degrees C.

The above experiments have indicated an unexpected reduction in the gelation temperature or starch suspensions as exemplified by the rapid rise in viscosity over a narrow range of temperature. This is interpreted as a form of co-solvency which is more apparent when the SCMC has a greater degree of substitution and so possesses a greater affinity for water. Thus, when water plus such SCMC enters starch granules during the early stages of granule rupture, the natural tendency of SCMC molecules to uncoil and expand assists the rupture of the granules at lower temperatures than would happen if SCMC were not present.

A reduction in the temperature at which starch gels and so is rendered capable of forming a more or less continuous film within the structure of the paper web is a benefit to those making paper since it is to be expected that the heat energy required to attain gelation will be reduced; additionally, the gelation will take place at an earlier stage in the drying section of the paper-making process, thus allowing more time for the beneficial interactions between starch and cellulose fibres to take place.

Experiment 2—To demonstrate the rheological effect of xanthan gum (suspension stability)
(a) 38% Starch solids slurry

250 ml quantities of a commercial starch slurry known as Tenstar®AB manufactured by Ranks Hovis MacDougall Ltd., containing 38% by weight of wheat starch solids were treated with several additions of xanthan gum. The amount of settlement of sedimentation of the starch was judged by noting the volume of clear liquid appearing in the upper part of the fluid when stored in 250 ml graduated glass cylinders over periods of several days. The results were noted and shown in Table 2 below.

TABLE 2

38% Tenstar starch slurry

| Per cent xanthan gum (on total volume) | Volume of clear liquid (ml) | | | |
|---|---|---|---|---|
| | 1 day | 3 days | 7 days | 14 days |
| 0.0 | 0 | 5 | 10 | 25 |
| 0.10 | 0 | 0 | 5 | 10 |
| 0.15 | 0 | 0 | 0 | 0 |
| 0.20 | 0 | 0 | 0 | 0 |

(b) 18% starch solids slurry

The procedure described in Example 2(a) was repeated with another commercial starch slurry known as Staper Starch, containing 18% starch solids. The results are shown in Table 3.

TABLE 3

| Per cent xanthan gum (on total volume) | Volume of clear liquid (ml) | | | |
|---|---|---|---|---|
| | 1 day | 3 days | 7 days | 14 days |
| 0.0 | 120 | 140 | 170 | 180 |
| 0.10 | 50 | 70 | 110 | 150 |
| 0.15 | 20 | 40 | 60 | 70 |
| 0.20 | 0 | 0 | 0 | 0 |

(Note: The slurries used in the above experiments were treated with 0.2% dichlorophen in order to prevent microbiological interference with the starch and polymer dispersions).

The results of the above experiments indicate that xanthan gum addition to commercial slurries of starch has the beneficial effect of preventing settlement of the stach particles and so provides the beneft of long-term storage without the necessity for continuous agitation as is the case of the prior art.

Experiment 3—To demonstrate the benefits of conjoint use of xanthan gum and water-soluble film-forming polymer as compared with either component above.
(a) Effect on strength of hand made paper

Blends of starch combined with sodium carboxymethyl cellulose and/or xanthan gum were prepared as shown in Table 4.

TABLE 4

| Blend | Starch | SCMC DS 0.65 | SCMC DS 0.85 | Xanthan gum |
|-------|--------|--------------|--------------|-------------|
| A | 100 | 0 | 0 | 0 |
| B | 96 | 4 | 0 | 0 |
| C | 96 | 0 | 4 | 0 |
| D | 99.6 | 0 | 0 | 0.4 |
| E | 95.6 | 0 | 4 | 0.4 |
| F | 95.6 | 4 | 0 | 0.4 |

250 grams of each blend were mixed into 750 ml water so as to form 25% w/v slurries which were used to spray on to hand-made paper as it was being formed. The spray was arranged so as to deliver 0.7 ml on each occasion which, on paper sheets of nominal 3.7 grams dry weight, is equivalent to 4.7% add-on of dry starch or blend to dry paper.

The paper furnish was bleached kraft with neutral cationic retention aid. After drying and calendering, the sheets were tested for burst strength with a Mullen Tester. The mean of 10 tests was recorded and compared with untreated paper made at the same time but sprayed with water in place of the starch slurry.

TABLE 5
Bleached kraft; 3.7 grams sheets; 4.7% starch add-on

| Blend | Mullen burst (kPa) | % Change |
|-------|--------------------|----------|
| Nil | 14.2×6.9 | 0.0 |
| A | 15.7×6.9 | +10.5 |
| B | 16.5×6.9 | +16.5 |
| C | 17.0×6.9 | +19.7 |
| D | 17.0×6.9 | +19.7 |
| E | 17.2×6.9 | +21.1 |
| F | 17.5×6.9 | +23.2 |

The results of the experiments shown in Table 5 illustrate the beneficial effects of increasing the bursting strength of paper by adding starch; they further show the additional benefits derived from the addition of small proportions of xanthen gum and a water-soluble film-forming polymer as described in this invention to the starch. The further improvement achieved by conjoint use of both additives (in E and F, as compared to one alone (in B, C and D, is to be noted The additional costs of making these additions are greatly outweighed by the commercial advantages to be gained by paper-makers making use of this invention.

Example 4
Use of atomising distributor
An atomiser as described in this invention was set above the wire part of a Foudrinier paper-making machine so as to distribute a slurry prepared by dilution of a commercial starch slurry into which had been introduced SMCM and xanthan gum immediately following manufacture of the slurry as a by-product of a process to extract other components of milled wheat. The proportions of materials used in this Example were:

| | Starch slurry |
|---|---|
| Wheat starch solids | 380 kg |
| SCMC | 18 kg |
| Xanthan gum | 2 kg |
| Water | 600 kg |

The paper-making machine had been set to produce 40 kg of paper of a weight of 35 grams per square metre per minute at a speed of 400 metres per minute. The paper-making machine furnish contained 1.5% dry basis of a commercial cationic starch acting partly as a method of providing the required burst strength and partly to aid drainage as well as retention of fibres on the wire part of the machine. Slurry of the above composition was pumped through a flowmeter at 1.5 litres per minute, representing 0.57 kg starch solids per minute, i.e. 1.4% of the paper dry weight. The slurry passed through an in-line diluter in which it was mixed with water separately pumped at 5 litres per minute. The resultant 6.5 litres per minute of diluted slurry was passed through an atomiser as herein described driven by an air motor set to run at 5000 revolutions per minute producing droplets of 500 micrometres mean diameter.

8

## EP 0 151 578 B1

The slurry was applied to the paper over a 30 hour period, samples being taken at approximately hourly intervals. During the period, the cationic starch addition to the furnish was progressively reduced to zero in order to make a comparison of this invention with a well-known and hitherto acceptable method of improving paper quality by the addition of a starch-based product to the paper-making machine furnish. Random results of this experiment are shown in Table 6.

### TABLE 6
Selected waste+bleached kraft; 50 grams/sq. metre; 1.4% starch add-on

| Sample | Mullen burst ratio* (kPa) | % Change | Tensile strength (kPa) | % Change |
|---|---|---|---|---|
| cationic starch 1.5% | | | | |
| Blank | 2.80×6.9 | 0.0 | 56×6.9 | 0.0 |
| A | 3.20×6.9 | +14 | 57×6.9 | +1.8 |
| cationic starch reduced to 0.8% | | | | |
| B | 3.41×6.9 | +22 | 60×6.9 | +6.7 |
| C | 3.36×6.9 | +20 | 62×6.9 | +9.7 |
| D | 3.33×6.9 | +19 | 59×6.9 | +5.4 |
| cationic starch reduced to zero | | | | |
| E | 3.46×6.9 | +24 | 56×6.9 | 0.0 |
| F | 3.52×6.9 | +26 | 56×6.9 | 0.0 |

*The parameter "Mullen Burst Ratio" (MBR) is defined as:—

$$MBR = \frac{MB}{GSM}$$

where:

MB=the pressure in kPa required to burst a sample of paper in the well-known Mullen Tester used throughout the paper-making industry;

GSM=the weight in grams of one square metre of paper.

Thus, the "Mullen Burst Ratio" an be used to eliminate minor variations in paper weight which would otherwise affect the results of the burst test.

The results show that the addition of starch increased the burst strength of paper already containing a strength-increasing additive; furthermore, the Mullen Burst Strength Ratio increased still further as the previously used strength-increasing additive was progressively reduced to zero. Therefore, the addition of starch modified as described in this invention and applied in the form of small droplets to paper during production on a paper-making machine can produce better results than another type of starch hitherto regarded as acceptable by those skilled in the art of manufacturing paper.

The results also show that the addition of starch modified as described above and applied to paper during the early stages of manufacture enhances the tensile strength of paper to which had already been added a tensile strength increasing additive, i.e. cationic starch.

## Claims

1. A composition for use in improving the strength of paper or board, comprising an aqueous suspension of uncooked starch and including xanthan gum in an amount of from 0.025% to 1.0% by weight on the weight of water in the starch suspension to prevent dilatancy and to increase the viscosity of the suspension so as substantially to prevent settlement of starch particles during storage and transportation, and also including a water-soluble polymer capable of forming a continuous film on application of the composition to paper or board, said polymer being present in an amount of from 0.25 to 7.5% by weight of water in said suspension.

2. A composition as claimed in claim 1 in which the water-soluble polymer is selected from the alkali metal salts of carboxymethyl starches, carboxymethyl celluloses, alginic acid and polyacrylic acid, and their homologues.

3. A composition according to claim 1 or 2 in which the water-soluble polymer comprises sodium carboxymethyl cellulose having a degree of carboxymethylation of from 0.35 to 1.4 and a molecular weight of from 15,000 to 800,000.

4. A composition as claimed in claim 3 in which the sodium carboxymethyl cellulose has a molecular weight of from 50,000 to 250,000.

5. A composition as claimed in any of claims 1 to 4 in which the aqueous suspension of starch is a residue produced in a food-manufacturing process without subsequent extraction or drying of the starch.

6. A method of making a composition as claimed in any of claims 1 to 5 including adding, to an aqueous suspension of uncooked starch, xanthan gum and a water-soluble polymer capable of forming a continuous film on application of the composition to paper or board.

7. A method of obtaining a composition as claimed in claim 5 comprising recovering an aqueous suspension or slurry of starch as a residue in a food-manufacturing process, adding to the suspension or slurry without intermediate drying or extraction of the starch xanthan gum and a water-soluble polymer capable of forming a continuous film on application of the composition to paper or board, and storing and/or transporting the resulting composition.

8. A method of making paper and board comprising applying (a) an aqueous suspension of uncooked starch containing xanthan gum in an amount of from 0.025 to 1.0% by weight on the weight of water in the starch suspension to prevent dilatancy and to increase the viscosity of the suspension so as substantially to prevent settlement of starch particles and (b) a water-soluble polymer capable of forming a continuous film on application of the composition to paper or board, said polymer being used in an amount of from 0.25 to 7.5% by weight of water in said suspension.

9. A method as claimed in claim 8 in which a composition as claimed in any of claims 1 to 5 is used.

10. A method as claimed in claim 8 in which a composition produced by adding xanthan gum and a water-soluble film-forming polymer to an aqueous suspension of uncooked starch is used, or a composition obtained by recovering an aqueous suspension or slurry of starch as a residue in a food-manufacturing process followed by adding to the suspension or slurry without intermediate drying or extraction of the starch xanthan gum and a water-soluble polymer capable of forming a continuous film on application of the composition to paper or board and storing and/or transporting the composition is used.

## Patentansprüche

1. Zusammensetzung zur Verwendung bei der Verbesserung der Festigkeit von Papier oder Karton, bestehend aus einer wäßrigen Suspension unaufgeschlossener Stärke, die Xanthangummi in einer Menge von 0,025% bis 1,0 Gew.-% bezogen auf das Gewicht des Wassers in der Stärkesuspension, um Dilatanz zu verhindern und die Viskosität der Suspension zu erhöhen, damit Absetzen der Stärketeilchen während der Lagerung und des Transports weitgehend verhindert wird, sowie auch ein wasserlösliches Polymer enthält, das beim Aufbringen der Zusammensetzung auf Papier oder Karton zur Bildung eines durchgehenden Films befähigt ist, wobei dieses Polymer in einer Menge von 0,25 bis 7,5 Gew.-% bezogen auf Wasser in besagter Suspension vorliegt.

2. Zusammensetzung nach Anspruch 1, worin das wasserlösliche Polymer unter Alkalisalzen von Carboxymethylstärken, Carboxymethylcellulosen, Alginsäure und Polyacrylsäure sowie deren Homologen ausgewählt ist.

3. Zusammensetzung nach Anspruch 1 oder 2, worin das wasserlösliche Polymer aus einer Natriumcarboxymethylcellulose mit einem Carboxymethylierungsgrad von 0,35 bis 1,4 und einem Molekulargewicht von 15 000 bis 800 000 besteht.

4. Zusammensetzung nach Anspruch 3, worin die Natriumcarboxymethylcellulose ein Molekulargewicht von 50 000 bis 250 000 besitzt.

5. Zusammensetzung nach einem der Ansprüche 1 bis 4, worin die wäßrige Stärkesuspension ein bei einem Lebensmittelherstellungsverfahren entstandener Rückstand ohne nachfolgende Extraktion oder Trocknung der Stärke ist.

6. Verfahren zur Herstellung einer Zusammensetzung nach einem der Ansprüche 1 bis 5, wobei man unter anderem einer wäßrigen Suspension unaufgeschlossener Stärke Xanthangummi und ein wasserlösliches Polymer zusetzt, das beim Aufbringen der Zusammensetzung auf Papier oder Karton zur Bildung eines durchgehenden Films befähigt ist.

7. Verfahren zur Gewinnung einer Zusammensetzung nach Anspruch 5, bei dem man eine wäßrige Suspension oder Aufschlämmung von Stärke als Rückstand in einem Lebensmittelherstellungsverfahren rückgewinnt, der Suspension oder Aufschlämmung ohne dazwischenliegende Trocknung oder Extraktion der Stärke Xanthangummi und ein wasserlösliches Polymer zusetzt, das beim Aufbringen der Zusammensetzung auf Papier oder Karton zur Bildung eines durchgehenden Films befähigt ist, und die so erhaltene Zusammensetzung lagert und/oder transportiert.

8. Verfahren zur Herstellung von Papier und Karton, bei dem man (a) eine wäßrige Suspension unaufgeschlossener Stärke, die Xanthangummi in einer Menge von 0,025 bis 1,0 Gew.-% bezogen auf das Gewicht des Wassers in der Stärkesuspension enthält, um Dilatanz zu verhindern und die Viskosität der Suspension zu erhöhen, damit Absetzen der Stärketeilchen weitgehend verhindert wird, und (b) ein wasserlösliches Polymer das beim Aufbringen der Zusammensetzung auf Papier oder Karton zur Bildung eines durchgehenden Films befähigt ist, wobei dieses Polymer in einer Menge von 0,25 bis 7,5 Gew.-% bezogen auf Wasser in besagter Suspension eingesetzt wird, aufträgt.

9. Verfahren nach Anspruch 8, worin eine Zusammensetzung nach einem der Ansprüche 1 bis 5 verwendet wird.

10. Verfahren nach Anspruch 8, worin eine durch Zusatz von Xanthangummi und einem wasserlöslichen, filmbildenden Polymeren zu einer wäßrigen Suspension unaufgeschlossener Stärke hergestellte Zusammensetzung oder eine solche, die durch Rückgewinnung einer wäßrigen Suspension oder Aufschlämmung von Stärke als Rückstand in einem Lebensmittelherstellungsverfahren mit nachfolgender Zugabe von Xanthangummi und einem wasserlöslichen Polymer das beim Aufbringen der Zusammensetzung auf Papier oder Karton zur Bildung eines durchgehenden Films befähigt ist, zu der Suspension oder Aufschlämmung ohne dazwischenliegende Trocknung oder Extraktion der Stärke sowie Lagerung und/oder Transport der Zusammensetzung erhalten wurde, verwendet wird.

## Revendications

1. Composition utilisable pour améloirer la résistance mécanique d'un papier ou d'un carton, comprenant une suspension aqueuse d'amidon non cuit et contenant de la gomme xanthane en quantité de 0,025% à 1,0% en poids, par rapport au poids de l'eau dans la suspension d'amidon, pour empêcher la dilatance et pour augmenter la viscosité de la suspension de manière à éviter essentiellement le dépôt des particules d'amidon au cours du stockage et du transport, et contenant aussi un polymère soluble dans l'eau capable de former un film continu par application de la composition sur du papier ou du carton, ledit polymère étant présent à raison de 0,25 à 7,5% du poids de l'eau dans ladite suspension.

2. Composition selon la revendication 1, dans laquelle le polymère soluble dans l'eau est choisi parmi les sels de métaux alcalins des carboxyméthylamidons, des carboxyméthylcelluloses, de l'acide alginique et du poly(acide acrylique), et de leurs homologues.

3. Composition selon la revendication 1 ou 2, dans laquelle le polymère soluble dans l'eau comprend de la carboxyméthylcellulose sodique ayant un degré de carboxyméthylation de 0,35 à 1,4 et une masse moléculaire de 15 000 à 800 000.

4. Composition selon la revendication 3, dans laquelle la carboxyméthylcellulose sodique a une masse moléculaire de 50 000 à 250 000.

5. Composition selon l'une quelconque des revendications 1 à 4, dans laquelle la suspension aqueuse d'amidon est un résidu produit dans un procédé de fabrication d'aliments sans extraction ultérieure ni séchage ultérieur de l'amidon.

6. Procédé de fabrication d'une composition selon l'une quelconque des revendications 1 à 5, qui comprend l'addition, à une suspension aqueuse d'amidon non cuit, de gomme xanthane et d'un polymère soluble dans l'eau capable de former un film continu par application de la composition sur du papier ou du carton.

7. Procédé d'obtention d'une composition selon la revendication 5, comprenant la récupération d'une suspension ou d'une bouillie aqueuse d'amidon en tant que résidu d'un procédé de fabrication d'aliments, l'addition à la suspension ou à la bouillie, sans séchage ou extraction intermédiaire de l'amidon, de gomme xanthane et d'un polymère soluble dans l'eau capable de former un film continu par application de la composition sur du papier ou du carton, et le stockage et/ou le transport de la composition résultante.

8. Procédé de fabrication d'un papier et d'un carton, comprenant l'application (a) d'une suspension aqueuse d'amidon non cuit contenant de la gomme xanthane à raison de 0,025 à 1,0% en poids, par rapport au poids de l'eau dans la suspension d'amidon, pour empêcher la dilatance et pour augmenter la viscosité de la suspension, de manière à empêcher essentiellement le dépôt des particules d'amidon, et (b) d'un polymère soluble dans l'eau capable de former un film continu par application de la composition sur du papier ou du carton, ledit polymère étant utilisé à raison de 0,25 à 7,5% du poids de l'eau dans ladite suspension.

9. Procédé selon la revendication 8, dans lequel on utilise une composition selon l'une quelconque des revendications 1 à 5.

10. Procédé selon la revendication 8, dans lequel on utilise une composition produite par addition de gomme xanthane et d'un polymère filmogène soluble dans l'eau à une suspension aqueuse d'amidon non cuit, on bien on utilise une composition obtenue par récupération d'une suspension ou d'une bouillie aqueuse d'amidon en tant que résidu d'un procédé de fabrication d'aliments, suivie d'une addition, à la suspension ou à la bouillie, sans séchage ni extraction intermédiaire de l'amidon, de gomme xanthane et d'un polymère soluble dans l'eau capable de former un film continu par application de la composition sur du papier ou du carton, et du stockage et/ou du transport de la composition.